# EUROPEAN PATENT SPECIFICATION

(11) **EP 1 558 879 B1**
(45) Date of publication and mention of the grant of the patent: **06.12.2017**
(21) Application number: 03779340.3
(22) Date of filing: 27.10.2003
(51) Int. Cl.: F23K 5/22, H05B 3/14, H05B 3/50, B01D 1/00, F24H 1/12

(54) **FLUID HEATER**
FLUIDERHITZER
RECHAUFFEUR DE LIQUIDE

(30) Priority: 25.10.2002 US 421296 P
(43) Date of publication of application: 03.08.2005
(73) Proprietor: Algas-SDI International LLC, Seattle, WA 98107-0498 (US)
(72) Inventor: ZIMMER, George, M.,, Kent, WA 98042 (US)
(74) Representative: Marchand, André
(86) International application number: PCT/US2003/034123
(87) International publication number: WO 2004/038303

(56) References cited:
- EP-A2- 0 243 077
- DE-A1- 2 845 894
- DE-A1- 3 041 597
- GB-A- 915 826
- GB-A- 2 076 270
- US-A- 4 371 777
- US-A- 4 371 777
- US-A- 5 057 672
- US-A- 5 057 672
- US-A- 5 224 498
- US-A- 5 995 711
- US-A- 6 005 228
- US-A- 6 037 567
- US-B1- 6 330 395
- US-B1- 6 455 822

## Description

### BACKGROUND OF THE INVENTION

### Field of the Invention

This invention relates to a heater for heating fluids. More particularly, to a heater for water or vaporizing liquefied gases such as liquefied petroleum gas.

### Description of the Related Art

Fluid heaters for the heating and controlled vaporization of liquefied gases are generally known. One electrically heated liquefied petroleum gas (LPG) vaporizer is disclosed in U.S. Patent No. 4,255,646. Another liquefied gas vapor unit is disclosed in U.S. Patent No. 4,645,904. Typically, the vaporizer includes a hollow pressure vessel having a liquefied gas inlet near a lower end and a gas vapor outlet near a closed upper end remote from the liquefied gas inlet. A heating core is typically disposed within the pressure vessel, usually positioned close to the lower end. A plurality of resistive electric heating element may be embedded within the heating core.

Such vaporizers using electric heating elements often require the use of a temperature sensor coupled with a time proportional controller for applying power to the heating elements with a periodic on/off duty cycle determined by the deviation of the core temperature from a predetermined set point. If there is an increase of the core temperature above the set point the control circuit reduces the on time of the duty cycle to reduce the temperature. If the core temperature is below the set point, the control circuit increases the on time of the duty cycle. Complex control circuitry and switches are required.

Such known vaporizer may also have a liquefied gas sensor communicating with the interior of the pressure vessel near its upper end, below the gas vapor outlet. The liquefied gas sensor is typically an overflow sensor or "float switch" for sensing the level of liquefied gas in the pressure vessel and controlling a valve that opens and closes to stop the flow of liquefied gas into the pressure vessel. Accordingly, the valve is controlled to open the pressurized flow of liquefied gas into the pressure vessel and to shut off the flow before the liquefied gas fills the gas vapor head space and liquefied gas floods through the outlet of the vaporizer.

A problem with such known fluid heaters is the need to control the on/off duty cycle of the electric heater elements to prevent overheating. The circuitry required creates safety concerns and, in addition, maintenance and reliability concerns are created. Further, the circuitry increases the cost of manufacturing the fluid heaters.

Another problem common to most known fluid heaters is that, due to the presence of extremely volatile gasses, as well as a combustion source in the form of an electrical circuit and heat source, there is a potential of an explosion. As a result, the fluid heaters must be sufficiently encased in a protective shielding to suppress an internal explosion if they are used in environments that include other combustion or explosion dangers. Such shielding adds expense, weight and size to the fluid heaters, as well as making maintenance issues more complex.

Patent Application GB 2076270 discloses an air-heating device that includes a plurality of heating elements, having PTC elements, positioned between metal heat-radiating structures, and each heating element having electrodes on opposing sides of the heating element.

### BRIEF SUMMARY OF THE INVENTION

According to one embodiment of the present invention, a fluid heater is provided, including a first heat exchanger block, a fluid heating tube configured to receive a fluid to be heated, and a second heat exchanger block having a second fluid heating tube configured to receive a fluid to be heated. The first block and the second block have their internal surfaces facing each other. A heating unit is positioned between the first and second heat exchange blocks. In one embodiment, the heating unit is a positive temperature coefficient (PTC) heater, having one or more individual elements. A cavity may be formed between the two heat exchanger blocks in which the PTC elements are placed, or they may be positioned adjacent the heat exchange blocks without such a cavity.

In accordance with an embodiment of the invention, first and second bus plates provide power to a plurality of PTC elements sandwiched between the bus plates in an electrically parallel configuration. Each PTC element includes first and second conductive plates, and a plurality of positive temperature coefficient heating stones sandwiched between the conductive plates in an electrically parallel configuration.

### BRIEF DESCRIPTION OF THE SEVERAL VIEWS OF THE DRAWINGS

Figure 1 is an isometric view of a fluid heater embodying the present invention having a heat exchanger comprised of two stacked heat exchanger blocks and a capacity control valve.
Figure 2 is an isometric, exploded view of the fluid heater of Figure 1 with one to the heat exchanger blocks show in phantom line to better illustrate a tube encased therein and heating elements.
Figure 3 is an isometric view of a tube used in each of the heat exchanger blocks of the fluid heater of Figure 1.
Figure 4A is an isometric view of a positive temperature coefficient (PTC) heating element used to supply heat to the heat exchanger blocks of the fluid heater of Figure 1.
Figure 4B is an exploded view of the PTC heating element of Figure 4A, showing placement of the individual stones.
Figure 5 is an exploded isometric view of a second embodiment of the invention, showing the positioning of the components of the heating element within the cavity of the heat exchanger block.
Figure 6 is a cross-sectional side view of the embodiment of Figure 5.

### DETAILED DESCRIPTION OF THE INVENTION

The heater 10 includes a heat exchanger 12 comprised of two heat exchanger blocks 13 and 14 mounted face-to-face with eight positive temperature coefficient (PTC) heating elements 16 sandwiched between the heat exchanger blocks 13 and 16. In practice, the number of PTC heating elements may vary as required by the application. The number may vary from six or fewer, to fourteen or more.

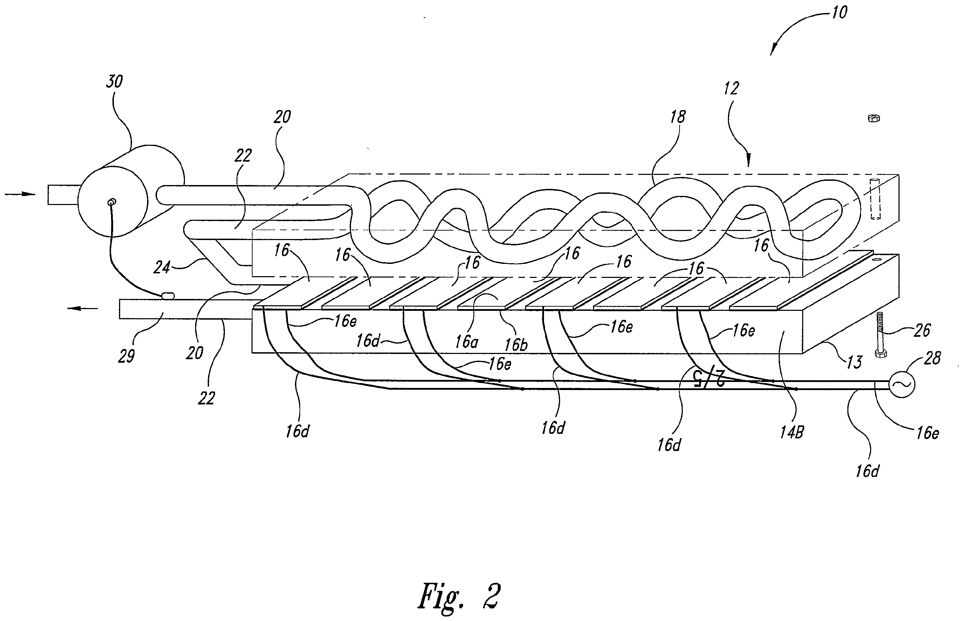

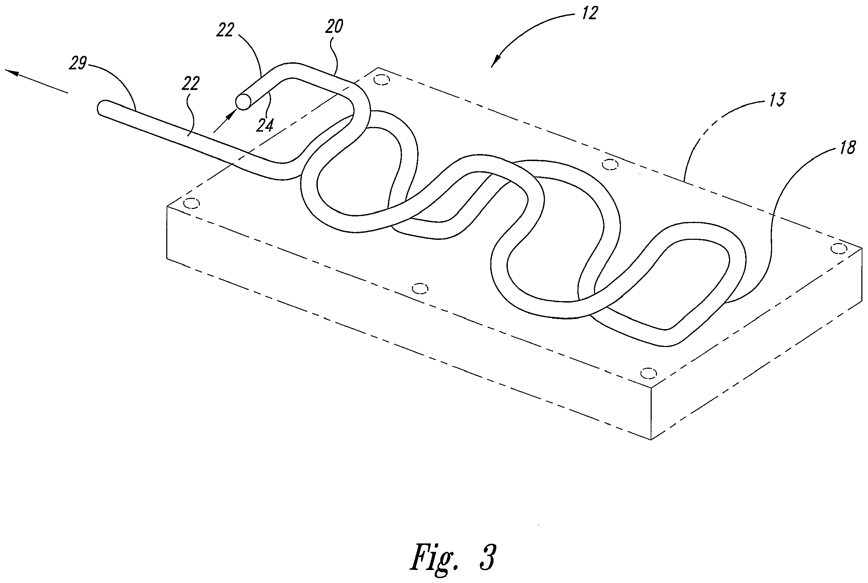

Each of the heat exchanger blocks 13 and 14 is formed of a casting of a thermally conductive material, such as aluminum, with an integral fluid heating tube 18 therein, as best shown in Figures 2 and 3. Each of the fluid heating tubes 18 has an inlet 20 and an outlet 22. The fluid heating tubes 18 of the heat exchanger blocks 13 and 14 are coupled together in series by a coupler tube 24 connecting the outlet 22 of the fluid heating tube 18 of the first heat exchanger block 13 and the inlet 20 of the fluid heating tube 18 of the second heat exchanger block 14.

The tubes 18 can be formed within the blocks 13 and 14 by any acceptable technique. One way is to provide the tubes 18 as stainless steel, carbon steel, or aluminum tubes of the proper shape and size and cast the aluminum around these tubes in place to obtain the final blocks 13 and 14. Another acceptable technique is to cast blocks 13 and 14 having the tubes formed within the blocks as part of the casting process. Other techniques also may be used.

The heat exchanger blocks 14 are secured tightly together in face-to-face relation with the heating elements 16 sandwiched between them by a plurality of fasteners 26, such as bolts or alternatively other fasteners or clamps. An electrical power supply 28, preferably between 100 to 240 volts, supplies electrical power to the heating elements 16. A fluid rate capacity control valve 30 is coupled to the inlet 20 of the vaporization tube 18 of the first heat exchanger block 13 and controls the flow of fluid from a fluid source 32, such as a liquefied petroleum gas storage tank, for example, to the heat exchanger 12 where it is heated and caused to vaporize. The vaporized fluid exits through the outlet 22 of the fluid heating tube 18 of the second heat exchanger block 14 and is supplied to an outlet tube 29.

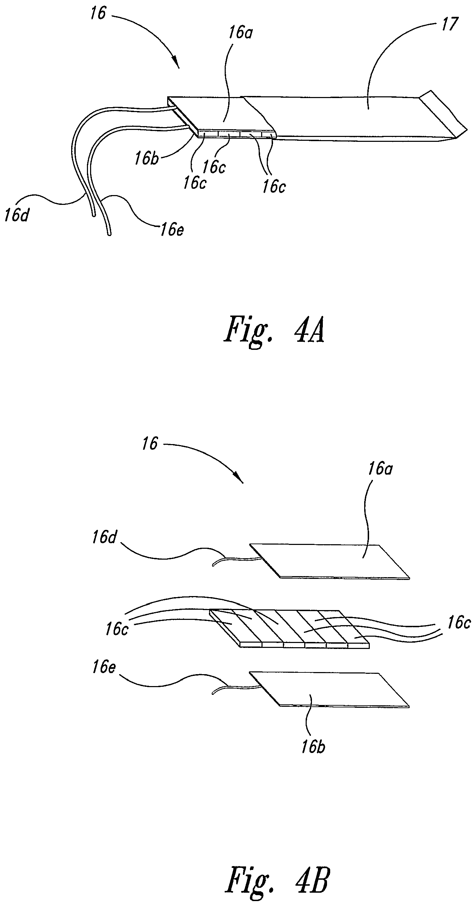

One of the PTC heating elements 16 used in the heater 10 is shown in Figure 4A, with an exploded view shown in Figure 4B. Such PTC heating elements are well known and include a pair of spaced-apart planar conductive plates 16a and 16b with a plurality of individual heat producing components, called "stones" in the art. Each stone heats as current passes through it. The stones 16c are positioned between the conductive plates. The PTC heating elements 16 have a flat, low side profile. An electrical lead 16d is attached to the end of plate 16a and an electrical lead 16e is attached to the end of plate 16b to supply a voltage across the stones between the conductive plates, such that all the stones are connected to the supply voltage in parallel. The stones 16c are arranged in a row between the conductive plates 16a and 16b with each stone having one face in electrical contact with conductive plate 16a and an opposite face in electrical contact with conductive plate 16b. Current passes through the stones from plate 16a to plate 16b to heat them.

The stones 16c are composed of a thermally sensitive semiconductor resistor material that generates heat in response to a voltage applied across it by the conductive plates16a and 16b, and have the characteristic of producing substantially the same heat output regardless of the voltage applied across it. As such, the PTC heating elements 16 produce a very constant heat output independent of the voltage used for the electrical power supply 28. This avoids having to carefully and accurately regulate the power source for the PTC heating elements 16 as is required in conventional electrical heaters so as to produce the desired heat. This produces a simpler and less expensive heater. It also reduces the need and expenses incurred with conventional heaters requiring highly regulated power when adapting them for use in countries that have very different power supply systems from each other. The PTC heating elements 16 allow wide use without regard for the power supply system providing the electrical power for the heating elements.

In one embodiment of the invention described, the PTC heating element is the EB style, using 5 stones sold by Dekko Enterprise of North Webster, IN. A sample of the EB style, 5 stone PTC heating elements has produced a surface temperature ranging from 103 to 117 degrees Centigrade when the voltage ranges from 120 volts to 230 volts, respectively.

In one embodiment, each of the PTC heating elements 16 is packaged in an electrically isolating jacket 17 formed of a material having a high coefficient of thermal conductivity. The jacket 17 is shown in Figure 4A partially removed to reveal the conductive plates 16a and 16b of the PTC heating element 16.

When the PTC heating elements 16 are tightly sandwiched between the conductive metal heat exchanger blocks to promote good thermal conductivity therewith, the jacket 17 prevents the conductive plates 16a and 16b of the heating element from making electrical contact with the heat exchanger blocks, while at the same time permitting the efficient transfer of the heat generated by the heating element through the jacket to the heat exchanger blocks. The electrically isolating, heat conductive jacket 17 of the PTC heating elements 16 may be made of KAPTON®, a polyamide film presently available from du Pont de Nemours and Company of Wilmington Delaware.

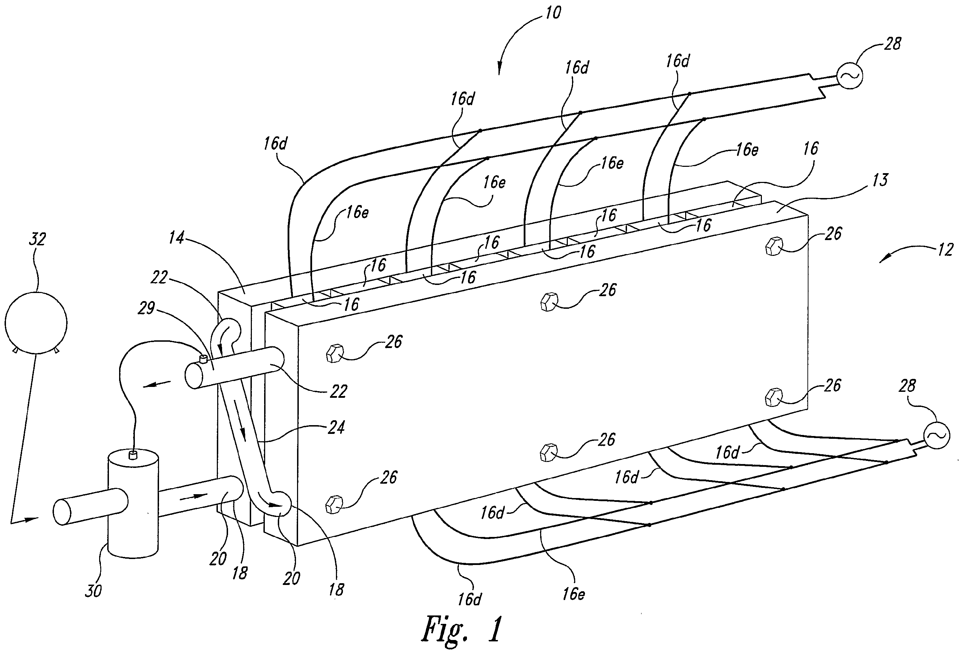

Other advantages are realized by using the PTC heating elements 16. As noted, the stones 16c are arranged in a row between the conductive plates 16a and 16b so that if one stone fails, the other stones between the conductive plates continue to operate and produce heat, thus making the heating element resistant to total failures. In this regard, as shown in Figure 1, the leads 16d of the heating elements 16 are connected together, and the leads 16e of the heating elements are connected together, such that the heating elements are connected in parallel to the electrical power supply 28. With this arrangement, should one of the heating elements 16 fail completely, the other heating elements will continue to have power supplied, and to operate. A large enough number of heating elements 16 are used such that should some of the stones fail in several of the heating elements, or even several of the heating elements completely fail, the other heating elements will still provide enough heat to accomplish the desired heating of the fluid supplied to the heat exchanger 12.

Another advantage results from the fact that the PTC heating elements 16 are self-regulating in that they have a cure temperature at which they operate and they will reduce their power they output if the temperature of the environment in which they are operating starts to go above their cure temperature. Because the PTC heating elements are self-regulating, the electrical power supplied by the electrical power supply 28 is simply connected directly to the PTC heating elements 16 without fear of producing a dangerous situation where the temperature increases without control. This eliminates the need for expensive heating element temperature control circuitry as required for conventional resistive heating elements and eliminates the fear of overheating.

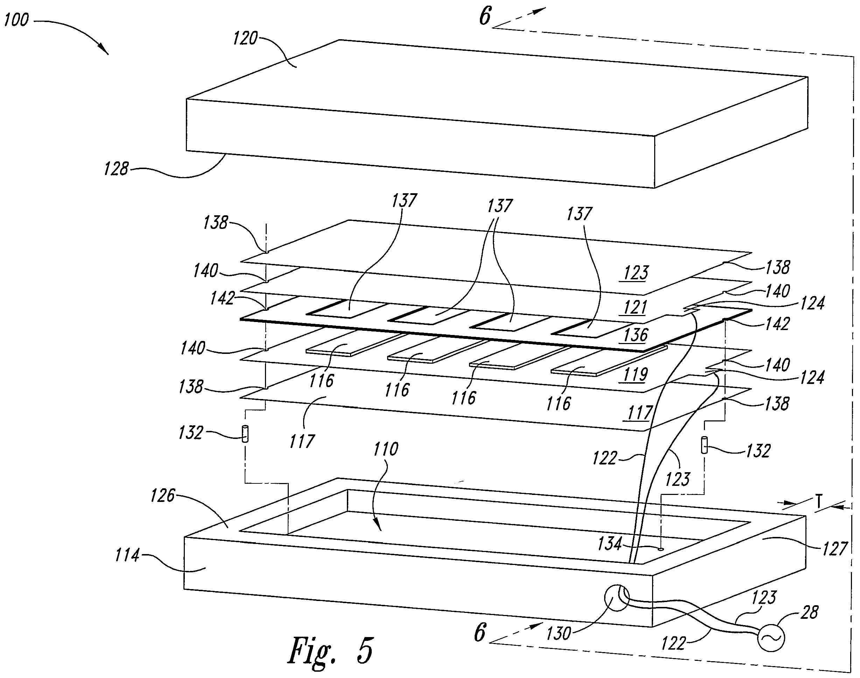

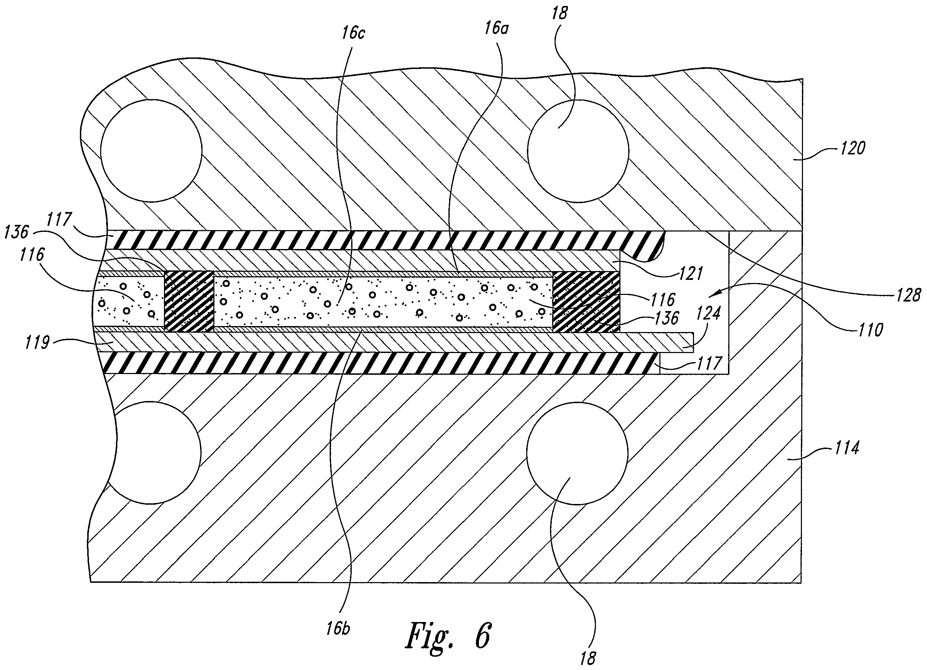

Figure 5 shows an exploded view of a heater 100, according to another embodiment of the invention. Figure 6 is a cross-sectional view taken along lines 6-6 of Figure 5. A first heat exchanger block 114 is shown, having a surface 126 with a cavity or depression 110 formed therein. A selected minimum wall thickness T is provided on all sides of the cavity. A second heat exchanger block 120 having a surface 128 is configured to mate with the surface 126 of heat exchanger block 114. The blocks 114 and 120 may be constructed by casting aluminum or some other material around tubes, as taught with respect to blocks 13 and 14. The block 120 is illustrated in Figure 6 as having a flat surface 128. Alternatively, the cavity 110 may be formed in both blocks 114 and 120 so that both have identical configurations and are interchangeable. According to an embodiment, the surfaces 126, 128 are not planar but are configured to mutually conform in shape. According to the embodiment illustrated in Figures 5 and 6, the cavity 110 has a planar surface to conform to the planar configuration of the heating assembly therein. According to alternative embodiments, the cavity 110 has a nonplanar surface that is configured to conform to a heating element or assembly having a nonplanar shape.

Electrically nonconductive alignment pins 132 are positioned in recesses 134 located toward each end of the cavity 110. Within the cavity 110 is an electrically isolating pad 117 formed of a material having a high coefficient of thermal conductivity. According to a preferred embodiment of the invention, the pad 117 has a degree of resilience and conformability, to conform to surface voids and irregularities, thus maintaining a maximum degree of contact for thermal transfer. The pad 117 includes alignment notches 138, which engage the alignment pins 132. Next to the pad 117 is a first power bus plate 119, which includes alignment notches 140 that engage the pins 132. A resilient and nonconductive alignment mask 136 is positioned adjacent the first bus plate 119. The mask 136 is provided with alignment notches 142 to engage the pins 132, and a plurality of cutouts 137.

A PTC heating element 116 is positioned in each respective cutout 137 of the mask 136, along the length of the bus plate 119. The PTC heating elements 116 are similar in construction to those previously described with reference to Figures 4A and 4B. In this embodiment, they do not include the individual electrical connections 16d and 16e. Additionally, they do not employ electrically insulating jackets 17 because they are connected to a common bus, as is explained herein.

Above the PTC heating elements 116 is a second power bus plate 121, and then a second electrically isolating pad 123 with respective alignment notches 140 and 138. The second heat exchanger block 120 is clamped to the first block 114 with the above listed components therebetween. The power bus plates 119 and 121 can be composed of aluminum, copper, steel, a silver coated substrate or any acceptable conductors. One plate 119 is coupled to one side of all the PTC elements 116 in parallel while the other plate 121 is coupled to the other side of all the PTC elements 116 in parallel. Power passes from bus 119, through elements 116 and into bus 121 to provide heating of all the elements in parallel, having the advantages as described elsewhere herein.

The electrically isolating pads 117, 123 have some degree of resiliency, such that the pressure of the clamping of the first and second heat exchanger blocks 114 and 120 compresses the pads 117, 123, which conform to the surfaces of the respective power bus plates 119, 121 on one side and the surfaces of the respective heat exchanger blocks 114, 120 on the other. Pressure is evenly maintained between the aluminum bus plates 119, 121 and the upper and lower surfaces of the PTC heating elements 116. A pressure is selected that ensures a dependable electrical connection between the power bus plates 119, 121 and the PTC elements 116, such that the conductive plates 16b and 16a are in electrical contact with the bus plates 119 and 121, respectively. Each power bus plate 119, 121 includes a contact tab 124. Electrical connection wires 122, 123 from a power source 28 make contact with the power bus plates 119, 121 at contact tabs 124. An aperture 130 passing from the outside of the device 100 into the cavity 110 provides passage of the connections 122, 123 into the device. The aperture 130 may be closed by an explosion proof seal (not shown) configured to permit passage of the connection wires 122, 123. Such seals are well known in the industry and are used in other applications where combustion or explosion are a concern. Electrical power is provided via the electrical connection wires 122, 123 to the contact tabs 124 of the power bus plates 119, 121, and thence to each of the PTC heating elements 116.

The cavity 110 is of the proper depth such that when the heat exchanger blocks 114 and 120 are clamped together, the pads 117, power supply bus plates 119, 121 and PTC elements 116 are appropriately biased together, the surface 126 of block 114 is pressed against the surface 128 of block 120. This is to provide an explosion proof assembly.

Regulations governing safety ratings and certifications of devices such as those described according to the principles of the invention specify that, in order to be certified as safe for use in a given environment, the device must have features that fall within prescribed limits. For example, to be certified as explosion proof, according to some regulatory standards, a device used to vaporize flammable liquids must have a minimum selected wall thickness between a combustion source and the exterior of the device. The present invention provides walls of blocks 114 and 120 that meet this standard. For example, thickness T of sidewall 127 is selected to meet or exceed this minimum thickness.

In addition, passages in the wall or gaps between the two blocks 114 and 120 may be provided as vents to release pressure in the event of an internal combustion to avoid an explosion. If the vents are of the proper size, sufficient pressure cannot build up to cause an explosion. There is a relationship between the selection of the length and width of the gap or passages to provide the proper pressure release while ensuring that any flame occurring within the device cannot reach the exterior. Additionally, the overall volume and capacity of the device affect the parameters to be met for such certification. A device according to the embodiment of Figures 5 and 6 is configured to conform to a hazardous area rating Class I, Division 1, as described by the National Electrical Code (NEC). The device is thus rated sufficiently safe that, even if used in areas with the potential for explosive conditions, it will not explode nor initiate combustion in flammable materials that might be nearby. Previous vaporizers and heaters having similar capacities have required a separate protective casing to conform to safety standards.

In the case of the illustrated embodiment of the invention, the heat exchanger blocks 114 and 120 are configured to mate together to completely enclose the heating elements, power connections, and fluid heating tubes. The unit will thus comply with NEC standards without the need for additional shielding. The result is a significant reduction in cost of manufacture of the inventive device over known heaters and vaporizers. The blocks 114 and 120 provide the many purposes of enclosing the tubes, enclosing the heating elements, functioning as heat exchangers, and also providing the explosion proof enclosure.

It will be recognized that the explosion proof nature of the heat exchanger blocks illustrated in Figures 4 and 5 is independent of the type of heating element employed. Thus, PTC elements in configurations other than those disclosed herein, as well as other types of heating coils and elements used with heat exchanger blocks that encapsulate the elements are also within the scope of the invention. Inner surfaces of the cavity 110 need not be planar, but rather need only conform to the shape of the heating element being employed, in order to maximize the efficiency of the exchange of heat to the blocks 114 and 120 while providing an explosion-proof seal.

Each of the heat exchanger blocks 114 and 120 may be provided with a cavity of about half the depth of the single cavity 110 of Figures 5 and 6, with the cavities positioned opposite each other such that a cavity of the required dimensions is formed by a combination of the two cavities. A possible advantage of this configuration is that the blocks 114 and 120 could be designed to be identical, thus simplifying the manufacture and assembly of the device. In applications where explosion proofing is not an issue, whether because the environment in which it will be used does not require it, or because the fluid to be heated is not flammable, it is not required that a cavity be present, and the heat elements can be positioned between the blocks and sealed as appropriate for the desired application.

According to one embodiment, a cavity is not formed within the heat exchanger blocks, but rather, is formed by the inclusion of a plate, having an aperture passing from one side to another, sandwiched between the blocks. The openings of the aperture are on surfaces of the plate that are in contact with the heat exchanger blocks, and the aperture is sized to receive a heating element therein.

Operation of the device is as follows. A voltage supply is provided by a power source 28 to the heater 100 via electrical connection wires 122 and 123. The power bus plates 119 and 121 are provided electrical power through contact with the connection wires 122 and 123. The PTC heating elements are each connected to the power supply through the bus plates 119 and 121. The PTC heating elements 116 heat up to their cure temperature. Heat from the elements 116 is conducted through the power bus plates 119 and 121 and the electrical isolating pads 117 to the heat exchanger blocks 114 and 120. Heat is transmitted to fluid in the fluid heating tubes 18 where the fluid is heated or vaporized. The maximum rate of flow of fluid in the tubes 18 is regulated by the capacity control valve 30 to ensure that the fluid reaches the desired temperature. In some cases, the desired temperature may be at about the boil point for the fluid being heated, such as water, liquefied petroleum products, or some other fluid. For some fluids and uses, the temperature may be selected to ensure that the fluid is fully vaporized at the exit. Because of the self-regulating nature of the PTC elements 116, the elements 116 will automatically modify their current draw from the supply voltage 28, up to the maximum power rating of the elements to accommodate changes in the temperature or rate of flow of fluid entering the device.

The embodiment of Figures 5 and 6 has several advantages over known devices and previous embodiments. The use of the bus plates 119, 121 obviates the need for the individual connectors 16d and 16e, resulting in a simplified connection that is less expensive to manufacture and less prone to breakdown, resulting in a more economical and more dependable device.

While the invention has been described with reference to liquefied gas vaporizers, the principles of the invention may also be applied to other types of fluid heaters and vaporizers. Other applications of the invention include water heaters for domestic hot water, industrial applications such as preheating of fluids and gasses, and fluid heaters for hospital and other health care requirements, etc. The invention may be especially useful in healthcare applications, where fluid heating devices are closely regulated to prevent burns to patients in the event of malfunctions. Again, due to the self-regulating nature of the PTC elements employed, this is an extremely safe and economical device for such an application. Another application of the invention may be in vehicles powered by engines that burn hydrocarbon gases. Such vehicles generally carry tanks of liquefied gas, which must be vaporized prior to use.

## Claims

1. A heating element, comprising:
a plurality of positive temperature coefficient elements (16, 116), each positive temperature coefficient element including:
first and second conductive plates (16a, 16b), and at least one positive temperature coefficient heating stone (16c) in electrical contact with, and sandwiched between the conductive plates wherein the heating element further comprises first and second buses (140), and that the plurality of positive temperature coefficient elements (16, 116) is in electrical contact with, and sandwiched between the buses in an electrically parallel configuration, **characterized in that** each positive temperature coefficient element (16, 116) includes a plurality of positive temperature coefficient heating stones (16c) sandwiched between the conductive plates in an electrically parallel configuration and the buses (140) are bus plates.

2. The heating element of claim 1 wherein the heating element further comprises first and second thermally conductive and electrically insulative pads positioned, respectively, in face to face contact with the first bus plate on a side opposite the plurality of positive temperature coefficient elements, and in face to face contact with the second bus plate on a side opposite the plurality of positive temperature coefficient elements.

3. A fluid heater, comprising:
a first heat exchanger block having a first surface; and
a heating element according to claim 1 having a second surface in thermal contact with the first surface.

4. The fluid heater of claim 3, further comprising a cavity formed in the first surface, in which the heating element is positioned.

5. The fluid heater of claim 3, further comprising a fluid heating tube within the first heat exchanger block.

6. The fluid heater of claim 3 wherein the heating element further includes a third surface, the fluid heater further comprising a second heat exchanger block having a fourth surface, the second heat exchanger block positioned such that the fourth surface is in thermal contact with the third surface.

7. The fluid heater of claim 6, further comprising a fluid heating tube within the second heat exchanger block.

8. The fluid heater of claim 6, further comprising a depression formed in each of the first and fourth surfaces, the depressions of the first and fourth surfaces together forming a cavity in which the heating element is positioned.

9. The fluid heater of claim 8 wherein the first and fourth surface are in face-to-face contact.

10. A fluid heater, comprising:
a heating element according to claim 1 having first and second surfaces on opposing sides thereof;
a first heat exchanger block having a fluid heating tube therein, the first block having a third surface;
a second heat exchanger block having a fluid heating tube therein, the second block having a fourth surface; and
the first and second blocks and the heating element positioned such, that the first and second surfaces are in face to face contact with the third and fourth surfaces, respectively, with the heating element sandwiched therebetween.

11. The fluid heater of claim 10 wherein:
the first heat exchanger block includes a fifth surface lying in a plane parallel to the third surface and a first selected distance therefrom;
the second heat exchanger block includes a sixth surface lying in a plane parallel to the fourth surface and a second selected distance therefrom;
the first block is configured such that the third surface constitutes a back wall of a cavity formed in the fifth surface, the cavity configured such that, when the first and second surfaces are adjacent to the third and fourth surfaces, respectively, the fifth surface is adjacent to the sixth surface, encapsulating, thereby, the heating element.

12. The fluid heater of claim 11 wherein the second selected distance is zero, such that the second and sixth surfaces are the same surface.

13. The fluid heater of claim 11 wherein the second selected distance is greater than zero, such that the second surface constitutes a back wall of a cavity formed in the sixth surface.

14. The fluid heater of claim 10 wherein the heating element further comprises first and second thermally conductive and electrically insulative pads positioned, respectively, between the first bus plate and the third surface and between the second bus plate and the fourth surface.

15. The fluid heater of claim 10 wherein the heating element further comprises an alignment mask sandwiched, with the plurality of positive temperature coefficient elements, between the first and second bus plates, the alignment mask including a plurality of cutouts evenly spaced along a length thereof, and wherein each of the plurality of positive temperature coefficient elements is positioned within a corresponding one of the plurality of cutouts, the alignment mask formed from an electrically nonconductive and compressible material.

16. The fluid heater of claim 10 wherein:
the first heat exchanger block includes a recess in the third surface;
the fluid heater further comprises an alignment pin positioned within the recess such that a first end of the pin extends from the recess generally perpendicularly to the third surface; and
the first and second bus plates of the heating element include respective alignment notches positioned such that, when the heating element is correctly positioned between the third and fourth surfaces, the respective alignment notches of the first and second bus plates engage the alignment pin.

17. The fluid heater of claim 10, further comprising a plate having fifth and sixth surfaces on opposite sides thereof and an aperture, passing from the fifth to the sixth surface, of a size sufficient to encompass the heating element, the plate positioned such that the fifth surface is adjacent to the third surface and the sixth surface is adjacent to the fourth surface, with the heating element encapsulated within the aperture of the block and between the third and fourth surfaces.

18. The fluid heater of claim 17 wherein the third and fourth surfaces are non-planar and configured to mate with the fifth and sixth surfaces of the plate, respectively.

19. A method for heating a fluid, comprising:
introducing a fluid into a first end of a first tube encased in a first block of thermally conductive material having a surface;
extracting the fluid from a second end of the tube;
introducing the fluid into a first end of a second tube encased in a second block of thermally conductive material having a surface, the first and second blocks arranged such that the respective surfaces are adjacent; and
applying a voltage to a heating element according to claim 1 encapsulated in a cavity between the first and second blocks, thereby:
heating the element, the thermally conductive material of the first and second blocks in contact therewith, and the first and second tubes, and
heating the fluid.

20. The method of claim 19 wherein heating the first and second tubes comprises heating the first and second tubes to a temperature exceeding the saturation temperature of the fluid, and wherein heating the fluid comprises vaporizing the fluid.

21. The method of claim 20 wherein the fluid is a liquefied gas.

## Patentansprüche

1. Heizelement umfassend:
eine Vielzahl von Kaltleiter-Elementen (16, 116), wobei jedes Kaltleiter-Element Folgendes einschließt:
eine erste und zweite leitende Platte (16a, 16b) und wenigstens einen Kaltleiterheizstein (16c), der mit den leitenden Platten in elektrischem Kontakt steht und zwischen den leitenden Platten eingelegt ist,
wobei
das Heizelement des Weiteren einen ersten und zweiten Bus (140) umfasst und die Vielzahl der Kaltleiter-Elemente (16, 116) mit den Bussen in elektrischem Kontakt steht und zwischen den Bussen in einer parallelen Anordnung eingelegt sind, **gekennzeichnet dadurch, dass** jedes der Kaltleiter-Elemente (16, 116) eine Vielzahl von Kaltleiterheizsteinen (16c) einschließt, die zwischen den leitenden Platten in einer elektrisch parallelen Anordnung eingelegt sind, und dass die Busse (140) Busplatten sind.

2. Heizelement nach Anspruch 1, wobei das Heizelement des Weiteren ein erstes und zweites wärmeleitendes und elektrisch isolierendes Pad umfasst, die jeweils auf einer der Vielzahl der Kaltleiter-Elemente gegenüberliegenden Seite in flächigem Kontakt mit der ersten Busplatte bzw. auf einer der Vielzahl der Kaltleiter-Elemente gegenüberliegenden Seite in flächigem Kontakt mit der zweiten Busplatte sind.

3. Fluiderhitzer umfassend:
einen ersten Wärmetauscherblock mit einer ersten Oberfläche und
ein Heizelement nach Anspruch 1 mit einer zweiten Oberfläche, die mit der ersten in thermischem Kontakt ist.

4. Fluiderhitzer nach Anspruch 3, wobei dieser des Weiteren einen in der ersten Oberfläche ausgebildeten Hohlraum umfasst, in dem das Heizelement angeordnet ist.

5. Fluiderhitzer nach Anspruch 3, wobei dieser in dem ersten Wärmetauscherblock des Weiteren ein Fluiderhitzerrohr umfasst.

6. Fluiderhitzer aus Anspruch 3, wobei das Heizelement des Weiteren eine dritte Oberfläche einschließt, der Fluiderhitzer einen zweiten Wärmetaucherblock mit einer vierten Oberfläche umfasst, der zweite Wärmetauscherblock so angeordnet ist, dass die vierte Oberfläche mit der dritten Oberfläche in thermischem Kontakt ist.

7. Fluiderhitzer nach Anspruch 6, wobei dieser im zweiten Wärmeaustauscherblock des Weiteren ein Fluiderhitzerrohr umfasst.

8. Fluiderhitzer nach Anspruch 6, wobei dieser des Weiteren jeweils eine in der ersten und vierten Oberfläche ausgebildete Vertiefung umfasst und die Vertiefungen der ersten und vierten Oberflächen zusammen einen Hohlraum bilden, in dem das Heizelement angeordnet ist.

9. Fluiderhitzer nach Anspruch 8, wobei die erste und vierte Oberfläche miteinander in flächigem Kontakt sind.

10. Fluiderhitzer umfassend:
ein Heizelement nach Anspruch 1 mit einer ersten und einer zweiten Oberfläche, die sich darauf auf gegenüberliegenden Seiten befinden;
einen ersten Wärmetauscherblock mit einem darin angeordneten Fluiderhitzerrohr, wobei der erste Block eine dritte Oberfläche aufweist;
einen zweiter Wärmetauscherblock mit einem darin angeordneten Fluiderhitzerrohr, wobei der zweite Block eine vierte Oberfläche aufweist und
wobei der erste und zweite Block und das Heizelement so angeordnet sind, dass die erste und zweite Oberfläche jeweils mit der dritten und vierten Oberfläche in flächigem Kontakt sind und das Heizelement dazwischen angeordnet ist.

11. Fluiderhitzer nach Anspruch 10, wobei:
der erste Wärmetauscherblock eine fünfte Oberfläche einschließt, die in einer Ebene liegt, die parallel zur und in einem ersten gewählten Abstand von der dritten Oberfläche liegt;
der zweite Wärmetauscherblock eine sechste Oberfläche einschließt, die in einer Ebene liegt, die parallel zur und in einem zweiten gewählten Abstand von der vierten Oberfläche liegt;
der erste Block so ausgestaltet ist, dass die dritte Oberfläche eine Rückwand eines in der fünften Oberfläche gebildeten Hohlraums bildet, wobei der Hohlraum so ausgestaltet ist, dass, wenn die erste und zweite Oberfläche jeweils an der dritten und vierten liegen, die fünfte Oberfläche an der sechsten Oberfläche liegt und so das Heizelement einschließen.

12. Fluiderhitzer nach Anspruch 11, wobei der zweite gewählte Abstand gleich Null ist und damit die zweite und sechste Oberfläche dieselbe Oberfläche sind.

13. Fluiderhitzer nach Anspruch 11, wobei der zweite gewählte Abstand größer als Null ist und damit die zweite Oberfläche eine Rückwand eines in der sechsten Oberfläche gebildeten Hohlraums ist.

14. Fluiderhitzer nach Anspruch 10, wobei das Heizelement des Weiteren ein erstes und ein zweites wärmeleitendes und elektrisch isolierendes Pad umfasst, die jeweils zwischen der ersten Busplatte und der dritten Oberfläche und zwischen der zweiten Busplatte und der vierten Oberfläche liegen.

15. Fluiderhitzer nach Anspruch 10, wobei das Heizelement des Weiteren eine Ausrichtungsmaske umfasst, die mit der Vielzahl von Kaltleiter-Elementen zwischen der ersten und der zweiten Busplatte angeordnet ist, wobei die Ausrichtungsmaske entlang einer ihrer Längen eine Vielzahl von gleichmäßig beabstandeten Aussparungen einschließt, und wobei jedes Element aus der Vielzahl von Kaltleiter-Elementen in einer korrespondierenden Aussparung aus der Vielzahl von Aussparungen angeordnet ist und wobei die Ausrichtungsmaske aus einem elektrisch nicht leitendem und stauchbaren Material gebildet ist.

16. Fluiderhitzer aus Anspruch 10, wobei:
der erste Wärmetauscherblock in der dritten Oberfläche eine Vertiefung einschließt;
der Fluiderhitzer des Weiteren einen in der Vertiefung so angeordneten Ausrichtungsstift umfasst, dass ein erstes Endstück des Stifts sich von der Vertiefung im Allgemeinen senkrecht zur dritten Oberfläche erstreckt und
die erste und zweite Busplatte des Heizelements jeweils Ausrichtungskerben einschließen, die so angeordnet sind, dass, wenn das Heizelement korrekt zwischen der dritten und vierten Oberfläche angeordnet ist, die jeweiligen Ausrichtungskerben der ersten und zweiten Busplatte den Ausrichtungsstift aufnehmen.

17. Fluiderhitzer nach Anspruch 10, wobei dieser des Weiteren eine Platte mit einer auf ihren gegenüberliegenden Seiten befindlichen fünften und sechsten Oberfläche und einer von der fünften zur sechsten Oberfläche verlaufenden Öffnung umfasst und die Platte so angeordnet ist, dass die fünfte Oberfläche an der dritten Oberfläche anliegt und die sechste Oberfläche an der vierten Oberfläche anliegt, wobei das Heizelement in der Öffnung des Blocks und zwischen der dritten und vierten Oberfläche eingeschlossen ist.

18. Fluiderhitzer nach Anspruch 17, wobei die dritte und die vierte Oberfläche nicht planar sind und so ausgelegt sind, dass sie jeweils mit der fünften und sechsten Oberfläche ineinandergreifen.

19. Verfahren zum Erhitzen eines Fluids umfassend:
Einspeisen eines Fluids in ein erstes Ende eines ersten Rohrs, das in einem ersten Block aus wärmeleitenden Material mit einer Oberfläche behaust ist;
Entnehmen des Fluids aus einem zweiten Ende des Rohrs;
Einspeisen des Fluids in ein erstes Ende eines zweiten Rohrs, das in einem zweiten Block aus wärmeleitenden Material mit einer Oberfläche behaust ist, wobei der erste und der zweite Block so angeordnet sind, dass die jeweiligen Oberflächen aneinander liegen und
Anlegen einer Spannung an ein Heizelement nach Anspruch 1, das in einem Hohlraum zwischen dem ersten und zweiten Block eingeschlossen ist und dadurch:
Erhitzen des Elements, des damit in Kontakt stehenden wärmeleitenden Materials des ersten und zweiten Blocks und des ersten und zweiten Rohrs und Erhitzen des Fluids.

20. Verfahren nach Anspruch 19, wobei ein Erhitzen des ersten und zweiten Rohrs ein Erhitzen des ersten und zweiten Rohrs auf eine Temperatur über der Sättigungstemperatur des Fluids und wobei ein Erhitzen des Fluids auch ein Verdampfen des Fluids umfasst.

21. Verfahren nach Anspruch 20, wobei es sich bei dem Fluid um Flüssiggas handelt.

## Revendications

1. Élément chauffant, comprenant :
une pluralité d'éléments à coefficient de température positif (16, 116), chaque élément à coefficient de température positif comprenant :
des première et seconde plaques conductrices (16a, 16b) et au moins une pierre chauffante à coefficient de température positif (16c) en contact électrique avec et intercalée entre les plaques conductrices,
dans lequel l'élément chauffant comprend en outre des premier et second bus (140), et **caractérisé en ce que** la pluralité d'éléments à coefficient de température positif (16, 116) est en contact électrique avec et intercalée entre les bus dans une configuration électriquement parallèle, **caractérisé en ce que** chaque élément à coefficient de température positif (16, 116) comprend une pluralité de pierres chauffantes à coefficient de température positif (16c) intercalées entre les plaques conductrices dans une configuration électriquement parallèle et **en ce que** les bus (140) sont des plaques de bus.

2. Elément chauffant selon la revendication 1, dans lequel l'élément chauffant comprend en outre des premier et second tampons thermiquement conducteurs et électriquement isolants positionnés respectivement en contact face à face avec la première plaque de bus sur un côté opposé à la pluralité d'éléments à coefficient de température positif et en contact face à face avec la seconde plaque de bus sur un côté opposé à la pluralité d'éléments à coefficient de température positif.

3. Dispositif de chauffage de fluide, comprenant :
un premier bloc échangeur de chaleur ayant une première surface ; et
un élément chauffant selon la revendication 1 ayant une deuxième surface en contact thermique avec la première surface.

4. Dispositif de chauffage de fluide selon la revendication 3, comprenant en outre une cavité formée dans la première surface, dans laquelle l'élément chauffant est positionné.

5. Dispositif de chauffage de fluide selon la revendication 3, comprenant en outre un tube de chauffage de fluide à l'intérieur du premier bloc échangeur de chaleur.

6. Dispositif de chauffage de fluide selon la revendication 3, dans lequel l'élément chauffant comprend en outre une troisième surface, le dispositif de chauffage de fluide comprenant en outre un second bloc échangeur de chaleur ayant une quatrième surface, le second bloc échangeur de chaleur étant positionné de sorte que la quatrième surface soit en contact thermique avec la troisième surface.

7. Dispositif de chauffage de fluide selon la revendication 6, comprenant en outre un tube de chauffage de fluide à l'intérieur du second bloc échangeur de chaleur.

8. Dispositif de chauffage de fluide selon la revendication 6, comprenant en outre une dépression formée dans chacune des première et quatrième surfaces, les dépressions des première et quatrième surfaces formant ensemble une cavité dans laquelle l'élément chauffant est positionné.

9. Dispositif de chauffage de fluide selon la revendication 8, dans lequel les première et quatrième surfaces sont en contact face à face.

10. Dispositif de chauffage de fluide, comprenant :
un élément chauffant selon la revendication 1 ayant des première et deuxième surfaces sur ses côtés opposés ;
un premier bloc échangeur de chaleur ayant un tube de chauffage de fluide à l'intérieur, le premier bloc ayant une troisième surface ;
un second bloc échangeur de chaleur ayant un tube de chauffage de fluide à l'intérieur, le second bloc ayant une quatrième surface ; et
les premier et second blocs et l'élément chauffant étant positionnés de sorte que les première et deuxième surfaces soient respectivement en contact face à face avec les troisième et quatrième surfaces, l'élément chauffant étant intercalé entre elles.

11. Dispositif de chauffage de fluide selon la revendication 10, dans lequel :
le premier bloc échangeur de chaleur comprend une cinquième surface située dans un plan parallèle à la troisième surface et à une première distance sélectionnée de celle-ci ;
le second bloc échangeur de chaleur comprend une sixième surface située dans un plan parallèle à la quatrième surface et à une seconde distance sélectionnée de celle-ci ;
le premier bloc est configuré de sorte que la troisième surface constitue une paroi arrière d'une cavité formée dans la cinquième surface, la cavité étant configurée de sorte que, lorsque les première et deuxième surfaces sont respectivement adjacentes aux troisième et quatrième surfaces, la cinquième surface soit adjacente à la sixième surface, encapsulant ainsi l'élément chauffant.

12. Dispositif de chauffage de fluide selon la revendication 11, dans lequel la seconde distance sélectionnée est nulle, de sorte que les deuxième et sixième surfaces sont la même surface.

13. Dispositif de chauffage de fluide selon la revendication 11, dans lequel la seconde distance sélectionnée est supérieure à zéro, de sorte que la deuxième surface constitue une paroi arrière d'une cavité formée dans la sixième surface.

14. Dispositif de chauffage de fluide selon la revendication 10, dans lequel l'élément chauffant comprend en outre des premier et second tampons thermiquement conducteurs et électriquement isolants positionnés respectivement entre la première plaque de bus et la troisième surface et entre la seconde plaque de bus et la quatrième surface.

15. Dispositif de chauffage de fluide selon la revendication 10, dans lequel l'élément chauffant comprend en outre un masque d'alignement intercalé avec la pluralité d'éléments à coefficient de température positif, entre les première et seconde plaques de bus, le masque d'alignement comprenant une pluralité de découpes régulièrement espacées sur sa longueur, et dans lequel chacun de la pluralité d'éléments à coefficient de température positif est positionné à l'intérieur d'une découpe correspondante de la pluralité de découpes, le masque d'alignement étant formé à partir d'un matériau électriquement non conducteur et compressible.

16. Dispositif de chauffage de fluide selon la revendication 10, dans lequel :
le premier bloc échangeur de chaleur comprend un évidement dans la troisième surface ;
le dispositif de chauffage de fluide comprend en outre une broche d'alignement positionnée à l'intérieur de l'évidement de sorte qu'une première extrémité de la broche s'étende à partir de l'évidement généralement perpendiculairement à la troisième surface ; et
les première et seconde plaques de bus de l'élément chauffant comprennent des encoches d'alignement respectives positionnées de sorte que, lorsque l'élément chauffant est correctement positionné entre les troisième et quatrième surfaces, les encoches d'alignement respectives des première et seconde plaques de bus viennent en prise avec la broche d'alignement.

17. Dispositif de chauffage de fluide selon la revendication 10, comprenant en outre une plaque ayant des cinquième et sixième surfaces sur ses côtés opposés et une ouverture, passant de la cinquième à la sixième surface, d'une taille suffisante pour englober l'élément chauffant, la plaque étant positionnée de sorte que la cinquième surface soit adjacente à la troisième surface et la sixième surface soit adjacente à la quatrième surface, l'élément chauffant étant encapsulé à l'intérieur de l'ouverture du bloc et entre les troisième et quatrième surfaces.

18. Dispositif de chauffage de fluide selon la revendication 17, dans lequel les troisième et quatrième surfaces sont non planes et configurées pour s'accoupler respectivement aux cinquième et sixième surfaces de la plaque.

19. Procédé de chauffage d'un fluide, comprenant :
l'introduction d'un fluide dans une première extrémité d'un premier tube encastré dans un premier bloc de matériau thermiquement conducteur ayant une surface ;
l'extraction du fluide d'une seconde extrémité du tube ;
l'introduction du fluide dans une première extrémité d'un second tube encastré dans un second bloc de matériau thermiquement conducteur ayant une surface, les premier et second blocs étant agencés de sorte que les surfaces respectives soient adjacentes ; et
l'application d'une tension à un élément chauffant selon la revendication 1 encapsulé dans une cavité entre les premier et second blocs, de manière à :
chauffer l'élément, le matériau thermiquement conducteur des premier et second blocs en contact avec celui-ci, et les premier et second tubes, et
chauffer le fluide.

20. Procédé selon la revendication 19, dans lequel le chauffage des premier et second tubes comprend le chauffage des premier et second tubes à une température supérieure à la température de saturation du fluide, et dans lequel le chauffage du fluide comprend la vaporisation du fluide.

21. Procédé selon la revendication 20, dans lequel le fluide est un gaz liquéfié.
